# EUROPÄISCHE PATENTSCHRIFT

(11) **EP 0 776 406 B1**
(45) Veröffentlichungstag und Bekanntmachung des Hinweises auf die Patenterteilung: **18.11.1998**
(21) Anmeldenummer: 95930499.9
(22) Anmeldetag: 18.08.1995
(51) Int. Cl.: E05F 15/00

(54) **SENSOREINRICHTUNG FÜR KRAFTFAHRZEUGE ZUR EINKLEMMERKENNUNG**
MOTOR VEHICLE SENSOR ARRANGEMENT FOR DETECTING JAMMING
SYSTEME DE DETECTION DE COIN AGE POUR VEHICULES AUTOMOBILES

(30) Priorität: 18.08.1994 DE 4429323
(43) Veröffentlichungstag der Anmeldung: 04.06.1997
(73) Patentinhaber: Bayerische Motoren Werke Aktiengesellschaft, 80788 München (DE); I.E.E. International Electronics & Engineering S.à.r.l., L-2632 Luxembourg (LU)
(72) Erfinder: MAHALEK, Josef, D-85551 Kirchheim (DE); SERBAN, Bogdan, L-4405 Soleuvre (LU); WITTE, Michel, L-8077 Bertrange (LU)
(86) Internationale Anmeldenummer: EP9503292
(87) Internationale Veröffentlichungsnummer: WO9606255

(56) Entgegenhaltungen:
- EP-A- 0 381 578
- EP-A- 0 405 351
- DE-A- 3 206 466
- DE-U- 8 713 426
- DE-U- 9 406 445
- US-A- 3 830 018

## Beschreibung

Sensoreinrichtung für Kraftfahrzeuge zur Einklemmerkennung bei einem beweglichen Flügel, der in eine Endlage überführbar ist.

Derartige Sensoreinrichtungen (z.B. US-A- 3 830 018) sind auf vielfältige Weise bekannt. Häufig wird aus den Leistungsdaten einer elektromotorischen Antriebseinheit für den Flügel eine Information über einen möglichen Einklemmfall entnommen. Der Motorstrom oder das vom Motor abgegebene Drehmoment steigen dann stark an. Probleme ergeben sich insbesondere bei längerem Betrieb durch mögliche mechanische Reibungserscheinungen zwischen dem Flügel und einer in der Regel vorgesehenen mechanischen Führung. Ein derartiger normaler Betriebsfall ist nur schwer von einem tatsächlichen Einklemmfall zu unterscheiden.

Es sind auch mechanische Tastgeber bekannt, die insbesondere in eine Dichtung eingearbeitet sind, in die der Flügel in seiner Endlage einfährt. Dabei stehen sich beispielsweise kapazitiv wirkende Flächen gegenüber, die im Einklemmfall in ihrem Abstand verändert werden. Das Problem dabei ist die Unterscheidung zwischen dem Einklemmfall und dem Einlaufen des Flügels in seine Endlage, bei der derselbe Effekt eintritt. Im Einklemmfall ist erforderlich, schlagartig eine elektromotorische Antriebseinheit abzuschalten oder sogar in ihrer Bewegungsrichtung umzukehren. Würde man dies auch beim Einlaufen des Flügels in seine Endlage tun, so könnte dieser nicht die vorgeschriebene Endlage tatsächlich erreichen, da es in dieser notwendig ist, die Dichtung elastisch zu verformen.

Der Erfindung liegt die Aufgabe zugrunde, eine Sensoreinrichtung der eingangs genannten Art zu schaffen, mit der es möglich ist, einen Einklemmfall sicher und zuverlässig zu erkennen und nur in diesem Fall schnell und sicher die erforderlichen Notmaßnahmen zu ergreifen.

Die Erfindung löst diese Aufgabe durch die kennzeichnenden Merkmale des Patentanspruchs 1.

Wesentlich für die Erfindung ist, daß der Druckwandler und seine Betätigungsmechanik räumlich entkoppelt sind. Dadurch ergibt sich eine konstruktive Variationsvielfalt, die es ermöglicht, die Sensoreinrichtung an den jeweiligen Einsatzfall anzupassen.

Durch das Zusammenwirken des Druckwandlers mit dem Vorsprung der Hohlraumwand kann der Vorlauf für das Ansprechen des Druckwandlers variabel eingestellt werden. Unter Vorlauf ist der Weg zu verstehen, den der Vorsprung bis zum Erreichen des Druckwandlers zurücklegen muß. Dieser Weg kann zwischen Null und dem Abstand des Druckwandlers zu der gegenüberliegenden Wand variieren. Damit ist es auch möglich, mechanische Toleranzen auszugleichen. Durch das Zusammenwirken des Vorsprungs mit dem Druckwandler kann die Ansprechcharakteristik des Druckwandlers, d. h., die Änderung seines Ausgangssignals an die jeweiligen Einsatzbedingungen hinsichtlich der Stärke der zu detektierenden Kraft und des Auslösewegs angepaßt werden. Unter Auslöseweg ist der Weg zu verstehen, der für die maßgebliche Signaländerung des Druckwandlers durch den Vorsprung zurückzulegen ist.

Die Anwendung der Erfindung bei Kraftfahrzeugen ist an verschiedenen Stellen möglich. Zu nennen sind dabei vor allem elektrisch angetriebene Fenster, ein Schiebe-Hebedach, ein Cabrio-Verdeck oder eine Tür, die mit Servounterstützung von einer Vorrast- in eine Schließstellung gebracht wird.

Vorteilhafte Ausgestaltungen der Erfindung sind Gegenstand der Patentansprüche 2 bis 5.

So ergeben die Merkmale des Patentanspruchs
- 2 den Vorteil einer einfachen Montage und ggf. Demontage,
- 3 die Möglichkeit, den Ansprechweg des Druckwandlers deutlich herabzusetzen,
- 4 eine weitere Verbesserung durch eine Verdoppelung der "Spitzenwirkung",
- 5 eine Konzentration der Bewegung auf den Sensorbereich und
- 6 eine Ausführungsform, die fertigungstechnisch einfach ist.

In der Zeichnung ist ein Ausführungsbeispiel der Erfindung dargestellt. Es zeigt
- Fig. 1: einen Querschnitt durch eine erfindungsgemäße Sensoreinrichtung und
- Fig. 2: die Sensoreinrichtung von Fig. 1 im Detail.

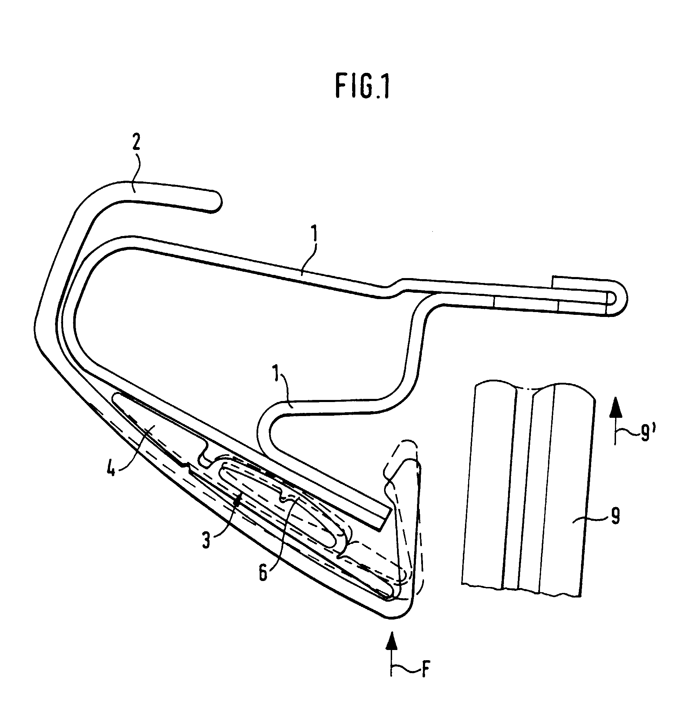

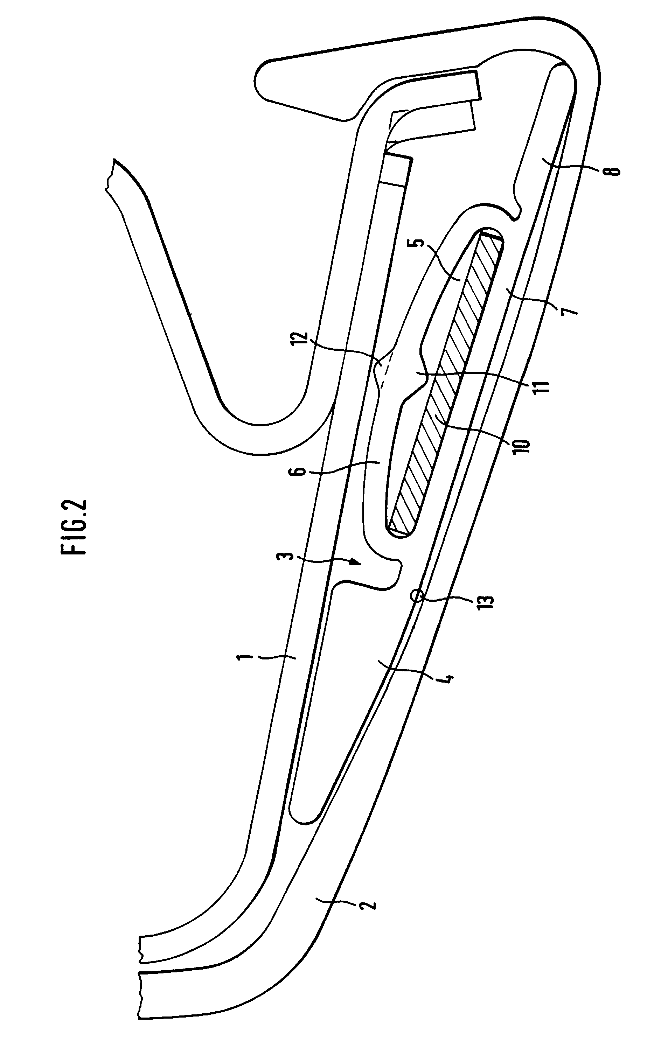

Der Schnitt von Fig. 1 zeigt einen Türrahmen 1 mit einer nachgiebigen Abdeckblende 2. Zwischen dem Rahmen 1 und der Blende 2 befindet sich ein Körper 3 aus elastischem Material, der vergrößert in Fig. 2 dargestellt ist. Der Körper 3 besteht aus einem keilförmigen Abschnitt 4 und aus einem Hohlraum 5 mit gegenüberliegenden Wänden 6 und 7. Ein Endstück 8 hält den Körper 3 in der eingezeichneten Lage.

Der Rahmen 1 dient als Anschlag für eine elektromotorisch bewegbare Fensterscheibe 9, die in Richtung eines Pfeils 9' verfahrbar ist. In der Endlage der Scheibe 9 wirkt eine nicht dargestellte Dichtung zwischen Scheibe 9 und dem Fensterrahmen 1.

Innerhalb des Hohlraums 5 befindet sich ein Druckwandler 10, der beispielsweise in Form eines Foliendrucksensors aufgebaut ist. Ein derartiger Sensor ist aus der DE 30 44 384 C2 bekannt. Die Wand 6 besitzt einen Vorsprung 11, der spitz zuläuft und auf den Druckwandler 10 ausgerichtet ist sowie einen nach außen gerichteten Vorsprung 12, der den Hohlraum 5 gegen den Rahmen 1 abstützt.

Im Normalfall läuft die Scheibe 9 in die Endlage ein und wird dort nach Stillsitzen des Antriebs gehalten. Durch Bewegungsumkehr wird die Scheibe 9 entgegen der Richtung des Pfeils 9' bewegt und gibt schließlich die Fensteröffnung frei. Kommt es beim erneuten Hochlaufen zu einem Einklemmfall, so wird der eingeklemmte Körper (nicht dargestellt) durch die Scheibe 9 gegen die mit F bezeichnete Stelle der Blende 3 gedrückt. Aufgrund der Eigenelastizität der Blende 3 wird diese nach oben verschwenkt und nimmt beispielsweise die strichliert eingezeichnete Stellung ein. Da der Rahmen 1 starr ist, verringert sich der Abstand zwischen der Blende 2 und dem Rahmen 1. Durch die Wirkung des Vorsprungs 12 wird die Bewegung der Wand 6 begrenzt, während die Wand 7 und damit der Druckwandler 10 noch die Bewegung fortsetzt. Schließlich dringt der Vorsprung 11 in die Oberfläche des Druckwandlers 10 ein, dessen Ausgangssignal sich dadurch deutlich verändert. Als Ausgangssignal kann beispielsweise der Widerstandswert des hier verwendeten Foliendrucksensors verwendet sein.

Die Blende 2 wird nur im Einklemmfall in der beschriebenen Weise bewegt. Im Normalfall bleibt die Blende in der eingezeichneten Ausgangslage. Durch die Gestaltung der Vorsprünge 11 und 12, den Abstand dieser Vorsprünge vom Türinnenblech bzw. der Oberfläche des Druckwandlers 10 und die Charakteristik des Druckwandlers 10 lassen sich entsprechend den jeweiligen Anforderungen unterschiedliche Vorlaufwege bis zum Ansprechen des Druckwandlers 10 vorgeben. Ist es gewünscht, bei relativ geringen Kräften möglichst unmittelbar auf einen Einklemmfall zu reagieren, so kann der Abstand zwischen dem Vorsprung 11 an der Oberfläche des Druckwandlers 10 möglichst gering gehalten werden. Die Kontur des Vorsprungs 11 kann innerhalb der fertigungstechnischen Möglichkeiten so groß wie möglich sein. Schließlich kann auch durch die Charakteristik des Druckwandlers 10 die Ansprechempfindlichkeit beeinflußt werden. Es sind derartige Wandler bekannt, bei denen bereits bei geringer Flächenpressung eine starke Änderung ihres Gesamtwiderstands auftritt, die mit einer nachgeschalteten Elektronik dann problemlos detektiert werden kann.

Weitere Einflußfaktoren für die Charakteristik der erfindungsgemäßen Sensoreinrichtung sind die Elastizität der Blende 2 sowie die Gestalt des Keils 4, insbesondere seine Erstreckung innerhalb des Raumes zwischen dem Rahmen 1 und der Blende 2. Durch den Keil 4 wird etwa an der Übergangsstelle zum Hohlraum 5 ein Lagerpunkt 13 geschaffen, um den herum die Blende 2 mit dem Hohlraum 5 schwenkbar ist. Durch das Zusammenspiel der verschiedenen Faktoren läßt sich die Charakteristik der Sensoreinrichtung in weiten Bereichen variieren und an die jeweiligen Einbauverhältnisse sowie Auslösungskriterien für nachgeschaltete Sicherheitsmaßnahmen, hier Stillstand bzw. Bewegungsumkehr des Scheibenantriebs, anpassen.

## Patentansprüche

1. Sensoreinrichtung für Kraftfahrzeuge zur Einklemmerkennung bei einem beweglichen Flügel, der in eine Endlage überführbar ist,
dadurch gekennzeichnet, daß zumindest in der Nähe der Bewegungsbahn des Flügels (9) ein Hohlraum (5) mit elastischen Wänden (6, 7) sitzt, an dessen einer Wand (7) sich ein Druckwandler (10) befindet und an dessen in der Bewegungsrichtung des Flügels zumindest in etwa gegenüberliegenden Wand (6) ein Vorsprung (11) auf den Druckwandler (10) ausgerichtet ist, daß der Ansprechweg des Druckwandlers (10) wesentlich kleiner als der Abstand der beiden Wände (6, 7) ist,
daß der Hohlraum zwischen einer elastischen Blende (2) und einem Flügelrahmen (1) liegt und daß der Angriffspunkt (F) eines eingeklemmten Gegenstands in der Nähe des Flügels liegt.

2. Sensoreinrichtung nach Anspruch 1,
dadurch gekennzeichnet, daß der Druckwandler (10) in einen Kanal einschiebbar ist, der innerhalb des Hohlraums (5) verläuft.

3. Sensoreinrichtung nach Anspruch 1 oder 2,
dadurch gekennzeichnet, daß der Vorsprung (11) spitz ausläuft.

4. Sensoreinrichtung nach einem der Ansprüche 1 bis 3,
dadurch gekennzeichnet, daß auf der außenliegenden Seite der mit dem Vorsprung (11) versehenen Wand (6) ein weiterer Vorsprung (12) angeordnet ist, der entgegengesetzt zum ersten Vorsprung ausgerichtet ist und die Wand abstützt.

5. Sensoreinrichtung nach einem der Ansprüche 1 bis 4,
dadurch gekennzeichnet, daß dem Hohlraum ein Stützkeil (4) benachbart ist, der als Drehpunkt (13) für die Bewegung der Hohlraumwand (7) dient.

6. Sensoreinrichtung nach Anspruch 5,
dadurch gekennzeichnet, daß der Stützkeil (4) einstückig mit dem Hohlraum (5) ist.

## Claims

1. A sensor arrangement for motor vehicles for the detection of jamming in a moveable window or flap, which can be transported to a final position, **characterised in that,** adjacent to and outside the movement path of the window or flap (9) is located at least one hollow space (5) with elastic walls (6, 7), on one wall (7) of which is positioned a pressure converter (10) and on one somewhat opposite wall (6) in the direction of movement of the window or flap at least one projection (11) is directed towards the pressure converter (10), **that** the response travel of the pressure converter (10) is substantially smaller than the separation of the two walls (6, 7)
**that** the hollow space lies between an elastic covering (2) and a window frame (1) and **that** the attack point (F) of a jammed object lies in the neighbourhood of the window or flap.

2. A sensor arrangement according to Claim 1, **characterised in that** the pressure converter (10) can slide in a channel, which runs inside the hollow space (5).

3. A sensor arrangement according to Claim 1 or 2 **characterised in that** the projection (11) protrudes as a peak.

4. A sensor arrangement according to one of the claims 1 to 3, **characterised in that** on the outside of the wall (6) provided with the projection (11) a further projection (12) is arranged, which is directed in an opposite sense to the first projection (11) and supports the wall.

5. A sensor arrangement according to one of the claims 1 to 4, **characterised in that** a supporting wedge (4) is located adjacent to the hollow space (5), which serves as a pivot (13) for the movement of the hollow space wall (7).

6. A sensor arrangement according to Claim 5, **characterised in that** the supporting wedge (4) is integral with the hollow space (5).

## Revendications

1. Système de détection, pour véhicules automobiles, du coinçage d'un panneau qui se déplace pour venir occuper une position finale,
caractérisé en ce que
- au moins à proximité de la piste de déplacement du panneau (9) est placé un volume creux (5) à parois élastiques (6, 7) sur l'une (7) desquelles se trouve un convertisseur de pression (10), tandis que sur la paroi (6) qui lui est sensiblement opposée dans la direction du mouvement du panneau, se trouve une saillie (11) dirigée vers le convertisseur (10),
- la course de réponse du convertisseur de pression (10) est sensiblement inférieure à l'intervalle séparant les deux parois (6, 7),
- le volume creux se trouve entre un écran élastique (2) et un cadre de panneau (1),
- le point d'action F d'un objet coincé est proche du panneau.

2. Système selon la revendication 1,
caractérisé en ce que
le convertisseur de pression (10) peut être introduit par coulissement dans un canal situé à l'intérieur du volume creux.

3. Système selon la revendication 1 ou 2,
caractérisé en ce que
la saillie (11) est pointue.

4. Système selon une des revendications 1 à 3,
caractérisé en ce que
sur la face externe de la paroi (6) portant la saillie (11), il est prévu une autre saillie (12) orientée à l'opposé de la première saillie et servant d'appui à la paroi.

5. Système selon une des revendications 1 à 4,
caractérisé en ce que
près du volume creux (5) se trouve un coin de soutien (4) servant de point de rotation (13) pour le mouvement de la paroi (7) du volume creux.

6. Système selon la revendication 5,
caractérisé en ce que
le coin de soutien (4) ne fait qu'une pièce avec le volume creux (5).
